# EUROPEAN PATENT APPLICATION

(11) **EP 4 550 167 A1**
(43) Date of publication of application: **07.05.2025**
(21) Application number: 23856595.6
(22) Date of filing: 22.08.2023
(51) Int. Cl.: G06F 16/22

(54) **DATA ACQUISITION METHOD AND APPARATUS, AND DEVICE**

(30) Priority: 22.08.2022 CN 202211007893
(71) Applicant: Digital Currency Institute, The People's Bank of China, Beijing 100071 (CN)
(72) Inventor: MU, Changchun, Beijing 100071 (CN); LYU Yuan, Beijing 100071 (CN); QING, Sude, Beijing 100071 (CN); WANG, Yanhui, Beijing 100071 (CN); YU, Lei, Beijing 100071 (CN); WU, Hao, Beijing 100071 (CN)
(74) Representative: Winter, Brandl - Partnerschaft mbB
(86) International application number: PCT/CN2023/114179
(87) International publication number: WO 2024/041505

(57) **Abstract**

A data acquisition method relates to the technical field of the Internet and can solve the problem of low data acquisition efficiency. The data acquisition method includes: creating a target database, wherein the target database is configured to store transaction data corresponding to transaction identifiers of a plurality of transaction events in a block chain, and the transaction data includes input data and output data; receiving a first request message, wherein the first request message is configured to request to acquire target transaction data of a target transaction event, and the first request message includes a target transaction identifier of the target transaction event; in response to the first request message, acquiring the target transaction data from the target database by taking the target transaction identifier as an index; and sending the target transaction data.

## Description

The present application claims the priority of Chinese Patent Application 202211007893.3, filed on August 22, 2022, and the entire contents of which are herein incorporated by reference.

### Technical Field

The present disclosure relates to the technical field of the Internet, and in particular to a data acquisition method and apparatus, and a device.

### Background

A block chain provides a way for everyone to participate in bookkeeping and is characterized by decentralization and distrust. A client may perform a transaction via any one block chain node, and transaction data is stored in a block of the block chain in the form of an electronic record.

Generally, the transaction mode in the block chain is an Unspent Transaction Output (UTXO) mode, that is, output data in the transaction data of one transaction event is stored in a block to serve as input data in the transaction data of the next transaction event.

### Summary

In one aspect, an embodiment of the present disclosure provides a data acquisition method, including: creating a target database, wherein the target database is a database for storing transaction data corresponding to transaction identifiers of a plurality of transaction events in a block chain, and the transaction data includes input data and output data; receiving a first request message, wherein the first request message is configured to request to acquire target transaction data of a target transaction event, and the first request message includes a target transaction identifier of the target transaction event; in response to the first request message, acquiring the target transaction data from the target database by taking the target transaction identifier as an index; and sending the target transaction data.

In some embodiments, the target database includes a first correspondence for one-to-one correspondence between the transaction identifiers of the plurality of transaction events and the transaction data of the plurality of transaction events; and the data acquisition method further includes: acquiring in a first block a transaction identifier of a first transaction event, output data of the first transaction event, and a transaction identifier of a previous transaction event corresponding to the first transaction event, wherein the first transaction event is any one event among the plurality of transaction events, and the first block is a block for storing the output data of the first transaction event in the block chain; determining a second block for storing input data of the first transaction event according to the transaction identifier of the previous transaction event corresponding to the first transaction event; determining output data of a second transaction event stored in the second block as the input data of the first transaction event, wherein the second transaction event is the previous transaction event of the first transaction event; determining the input data of the first transaction event and the output data of the first transaction event as the transaction data of the first transaction event; and determining a correspondence between the transaction identifier of the first transaction event and the transaction data of a first transaction event as the first correspondence of the first transaction event.

In some embodiments, acquiring in the first block the transaction identifier of the first transaction event, the output data of the first transaction event, and the transaction identifier of the previous transaction event corresponding to the first transaction event includes: calling a target interface to acquire block data of the first block, wherein the block data of the first block includes the transaction identifier of the first transaction event, the output data of the first transaction event, and the transaction identifier of the previous transaction event corresponding to the first transaction event, and the target interface includes a Remote Procedure Call (RPC) interface.

In some embodiments, the target database further includes a second correspondence for one-to-one correspondence between block identifiers of a plurality of blocks and block data of the plurality of blocks, the plurality of blocks include the first block, and the block data of the first block further includes a block identifier of the first block; and the data acquisition method further includes: creating a second correspondence between the block identifier of the first block and the block data of the first block.

In some embodiments, calling the target interface to acquire the block data of the first block includes: calling the target interface to acquire the block identifier of the first block; and reading the second correspondence to acquire the block data of the first block corresponding to the block identifier of the first block.

In some embodiments, calling the target interface to acquire the block identifier of the first block includes: calling the target interface to traverse the plurality of blocks in the block chain, so as to acquire a block identifier of each block among the plurality of blocks.

In some embodiments, the data acquisition method further includes: receiving a second request message, wherein the second request message is configured to request to acquire target block data of a target block, and the second request message includes a target block identifier of the target block; in response to the second request message, acquiring the target block data from the target database by taking the target block identifier as an index; and sending the target block data.

In some embodiments, the target database includes a transaction database and a block database, the transaction database is configured to store the first correspondence, and the block database is configured to store the second correspondence.

In some embodiments, the transaction database and the block database are key-value databases.

In some embodiments, the target database stores correspondences in a target format, and the target format includes a Common Separated Values (CSV) format.

In some embodiments, the transaction identifier includes at least one of: a transaction hash value, a transaction number, and a transaction index value.

In some embodiments, a transaction mode in the block chain is an Unspent Transaction Output (UTXO) mode.

In another aspect, some embodiments of the present disclosure provide a data acquisition apparatus, including a communication unit and a processing unit, wherein the processing unit is configured to create a target database, wherein the target database is a database for storing transaction data corresponding to transaction identifiers of a plurality of transaction events in a block chain, and the transaction data includes input data and output data; the communication unit is configured to receive a first request message, wherein the first request message is configured to request to acquire target transaction data of a target transaction event, and the first request message includes a target transaction identifier of the target transaction event; the processing unit is further configured to, in response to the first request message, acquire the target transaction data from the target database by taking the target transaction identifier as an index; and the communication unit is further configured to send the target transaction data.

In still another aspect, some embodiments of the present disclosure provide an electronic device, including a memory, a processor, and a computer program stored on the memory and executable on the processor, wherein the computer program, when executed by the processor, implements the data acquisition method in the first aspect.

In still another aspect, some embodiments of the present disclosure provide a computer-readable storage medium, wherein a computer program is stored on the computer-readable storage medium, and the computer program, when executed by a processor, implements the data acquisition method in the first aspect.

### Brief Description of the Drawings

Fig. 1 is a composition diagram of a data acquisition system according to one or more embodiments;
Fig. 2 is a structural diagram of a block chain node according to one or more embodiments;
Fig. 3 is a flowchart of a data acquisition method according to one or more embodiments;
Fig. 4 is a flowchart of another data acquisition method according to one or more embodiments;
Fig. 5 is an index diagram of transaction data according to one or more embodiments;
Fig. 6 is a flowchart of still another data acquisition method according to one or more embodiments;
Fig. 7 is a flowchart of still another data acquisition method according to one or more embodiments;
Fig. 8 is a composition diagram of a target database according to one or more embodiments;
Fig. 9 is a flowchart of still another data acquisition method according to one or more embodiments;
Fig. 10 is a flowchart of still another data acquisition method according to one or more embodiments;
Fig. 11 is a composition diagram of another target database according to one or more embodiments;
Fig. 12 is a structural diagram of a data acquisition apparatus according to one or more embodiments; and
Fig. 13 is a structural diagram of another data acquisition apparatus according to one or more embodiments.

### Detailed Description of the Embodiments

In order to enable those ordinary skilled in the art to better understand the technical solutions of the present disclosure, the technical solutions in the embodiments of the present disclosure will be clearly and completely described below in combination with the drawings.

It should be noted that, the terms "first" and "second" and the like in the specification, claims and the above drawings in the embodiments of the present disclosure are used for distinguishing similar objects, and are not necessarily used for describing a specific sequence or precedence order. It should be understood that the data used in this way may be interchanged under appropriate circumstances, so that the embodiments of the present disclosure described herein may be implemented in a sequence other than those illustrated or described herein. The implementations described in the following exemplary embodiments do not represent all implementations consistent with the embodiments of the present disclosure. Instead, they are merely examples of apparatuses and methods consistent with some aspects of the embodiments of the present disclosure as detailed in the appended claims.

It should also be understood that, the term "include" indicates the presence of described features, integers, steps, operations, elements, and/or components, but does not exclude the presence or addition of one or more other features, integers, steps, operations, elements, and/or components.

In order to facilitate the understanding of the embodiments of the present disclosure, related elements involved in the embodiments of the present disclosure will now be described.
(1) A block chain technology, also referred to as a distributed account book technology, is an emerging technology in which several computing devices jointly participate in "bookkeeping" (i.e., recording transaction data) and jointly maintain a complete distributed database. Since the block chain technology has the characteristics that it is decentralized (i.e., there is no central node) and open and transparent, and that each computing device may participate in database recording and the computing devices may quickly perform data synchronization, the block chain technology has been widely used in many fields.

A block chain system may include a plurality of block chain nodes. The block chain node is a device having a communication function and a storage function, for example, a device storing a block chain. For ease of description, a node is used for representing the block chain node in the embodiments of the present disclosure, that is, all nodes involved in the embodiments of the present disclosure may be used for representing the block chain nodes.

Each node may receive information and may also generate information. Different nodes maintain communication by maintaining a common block chain. In some embodiments, in the block chain system, any node may generate a new block according to transaction-related data sent by a client, and notify other nodes in the form of a broadcast, and the other nodes may verify this block. After all nodes in the block chain system reach a consensus, the new block may be added into the block chain.

The node in the embodiments of the present disclosure may be understood as a processing unit. In one implementation, the node may be a physical device, for example, a server or a terminal device. In another implementation, the node may be a virtual computer, the virtual computer is a general term of operating environments virtualized by software in all types of virtualization devices, and this concept includes a virtual machine and a container. In other implementations, the node may be a process or a thread; the thread is a minimum unit in which an operating system may perform operation scheduling, and the thread is included in the process and is an actual operation unit in the process; and the process is an operation activity of a program in a computer with regard to a data set and is a basic unit in which the system performs resource allocation and scheduling.

(2) In the block chain technology, the transaction data is permanently stored in the form of electronic records, and files for storing these electronic records are referred to as "blocks". The blocks are successively generated in a chronological order, each block records all transactions occurring during the creation thereof, and all blocks are summarized to form a chained collection of records. Since the throughput rates of the nodes are different in different block chain systems, the sizes of the blocks may also be different in different block chain systems.

It can be seen that transaction data within a generation time period of a block is recorded in the block, therefore the main body of the block is actually a collection of transaction data. The structural design of each block chain may not be exactly the same, but the block usually includes two parts, that is, a block header and a block body.

The block header is mainly used for recording a feature value of the current block, the feature value may include at least one of: an identifier of the current block (e.g., a serial number of the block), a hash value of the block body in the current block, a timestamp (used for indicating a generation time of the block), a transaction count, a nonce and other information; and in addition, the block header may further include a hash value of a previous block (specifically, a hash value of the block header in the previous block).

Since the block header includes a plurality of feature values, when the hash value of the block is determined, it is necessary to connect the feature values in the block header together in sequence to form a character string and then compute the hash value for the character string. Since numerical values of the feature values included in the block headers of different blocks are usually different, each block uniquely corresponds to one hash value. On the basis that each block uniquely corresponds to one hash value and that the block header of each block includes the hash value of the previous block, a plurality of blocks may form a block chain.

The block body may include a plurality of pieces of transaction data. For each piece of transaction data, the block body further includes information such as a certificate of a client (used for describing an initiating end of a transaction), a certificate of an endorsement node, and a signature of the endorsement node for the transaction. In some embodiments, for each transaction, the block body may further include a signature of a sorting node (or referred to as a consensus node) for the transaction. The signatures herein are all used for indicating authentication of the transaction by a device corresponding to the signature, and the certificates are all used for indicating identity.

The data such as the signature and the certificate are all used for verifying the transaction data, and these pieces of data usually occupy 70% of a storage space in the block body.

In some examples, Table 1 shows a structural form of a block. Certainly, the structure of the block is not merely limited to that shown in Table 1, and the value of each structure is not merely limited to that shown in Table 1.

**Table 1**

| | | | |
|---|---|---|---|
| Block header | Identifier of block | | 02000000 |
| | Hash value of block body | | 17975b97c18edlf7e255adf297599b55 |
| | Hash value of previous block | | 8a97295a2747b4fla0b3948df3990344 |
| | Timestamp | | 35860553 |
| | Nonce | | 48750833 |
| | Transaction count | | 63 |
| | | ...... | ...... |
| Block body | Transaction data 1, certificate of client, certificate of endorsement node, and signature | | |
| | | ... | |

### (3) Transaction

The transaction involved in the embodiments of the present disclosure refers to a procedure in which a user creates and publishes data to a distributed database of a block chain by using any node.

The transaction includes a narrowly-defined transaction and a broadly-defined transaction.

The narrowly-defined transaction refers to a value transfer issued by the user to the block chain, for example, in a traditional bitcoin block chain network, the transaction may be a transfer initiated by the user in the block chain.

The broadly-defined transaction refers to that the user publishes arbitrary data to the blockchain, for example, an operator may build an alliance chain based on actual service requirements, and deploy some online services (e.g., house renting services, vehicle scheduling services, insurance claim settlement services, credit services, medical services, and the like) based on the alliance chain, and in this type of alliance chain, the transaction may be a service message or a service request that is published by the user in the alliance chain and has a service intent; and as another example, the transaction may also be that the user sends data (e.g., an account balance or the like) to the block chain, so that an account state of the user is changed.

Therefore, as long as the user publishes arbitrary data to the distributed database of the block chain, they may all belong to the "transaction" described in the embodiments of the present disclosure.

### (4) Client

The user may implement functions such as creating a chain code and initiating a transaction via the client in the block chain system. The client may be deployed on any electronic device and is implemented by a corresponding software development kit (SDK) corresponding to the block chain system. The electronic device communicates with a node in the block chain network to implement corresponding functions of the client.

The data involved in the embodiments of the present disclosure may be data authorized by the user or fully authorized by each party.

As described in the background art, when the transaction data of one transaction event is stored in different blocks, the block chain node needs to call a plurality of interfaces to respectively acquire the transaction data in the plurality of blocks, and the interfaces need to be called for multiple times in the entire procedure, which consumes a long time, resulting in relatively low data acquisition efficiency of the block chain.

On this basis, an embodiment of the present disclosure provides a data acquisition method. After receiving a first request message, in response to the first request message, the block chain node may acquire target transaction data from a pre-created target database by taking a target transaction identifier as an index. Subsequently, the block chain node may send the target transaction data. In this way, since the transaction data stored in the database includes input data and output data, the block chain node only needs to access the target database, so that the data acquisition efficiency can be improved.

The data acquisition method provided in the embodiments of the present disclosure is exemplarily described below in combination with the drawings:

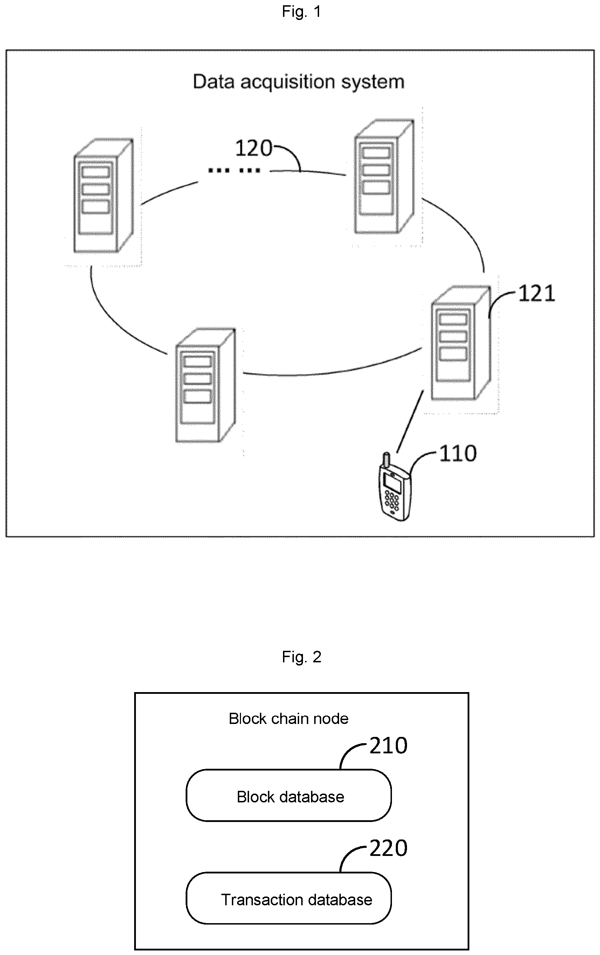

Fig. 1 is a composition diagram of a data acquisition system according to one or more embodiments, and as shown in Fig. 1, the data acquisition system may include a client 110 and a plurality of block chain nodes (including a block chain node 121) in a block chain 120. The client 110 may access the block chain 120 via the block chain node 121.

The block chain node 121 may be any block chain node among the plurality of block chain nodes.

The block chain 120 includes a plurality of blocks, and block data stored in each block includes transaction data of a transaction event occurring within a time period.

In some embodiments, the transaction mode in the block chain 120 may be a UTXO mode, that is, only an unspent output is recorded. At this time, the block data includes a transaction identifier of a transaction event, output data in transaction data of the transaction event, and a transaction identifier of a corresponding previous transaction event.

In some examples, Table 2 shows a storage format of the block data. Certainly, the storage format of the block data is not merely limited to that shown in Table 2, and the value of each structure is not merely limited to that shown in Table 2.

**Table 2**

| Transaction identifier: #2001 | | |
|---|---|---|
| Transaction input | Transaction output | |
| Previous transaction identifier | Amount | Output address |
| #1001 | 2.5 | Account number A |
| | 10 | Account number B |

In some embodiments, the client 110 may implement functions such as creating a chain code and initiating a transaction. The client 110 may be deployed on any electronic device and is implemented by a corresponding software development kit of the block chain system. The electronic device communicates with the block chain node 121 to implement corresponding functions of the client 110. The implementation of the client 110 is not limited in the embodiments of the present disclosure.

In some embodiments, the plurality of block chain nodes in the block chain 120 are devices having a communication function and a storage function, may be one separate server, or may also be a server cluster composed of a plurality of servers. In some implementations, the server cluster may also be a distributed cluster. The implementations of the plurality of block chain nodes in the block chain 120 are not limited in the embodiments of the present disclosure.

It should be noted that, the client 110 and the plurality of block chain nodes in the block chain 120 may be referred to as electronic devices.

Fig. 2 is a structural diagram of a block chain node according to one or more embodiments, and as shown in Fig. 2, the block chain node 121 may include a block database 210 and a transaction database 220.

The block database 210 is used for storing transaction data of each block among the plurality of blocks in the block chain 120.

In some embodiments, the block database 210 may be a key-value (KV) database. At this time, a correspondence between block identifiers and block data is stored in the block database 210.

The transaction database 220 is used for storing transaction data of a plurality of transactions in the block chain 120.

In some embodiments, the transaction database 220 may be a KV database. At this time, a correspondence between transaction identifiers and transaction data is stored in the transaction database 220.

In some embodiments, when the transaction database 220 is a KV database, the key is the transaction identifier of a transaction event, and the value is the transaction data of the transaction event.

In some embodiments, the transaction identifier may include a unique identifier of a transaction event, such as a transaction hash value of the transaction event, a transaction number of the transaction event, and a transaction index value of the transaction event.

In some embodiments, the transaction data may include input data of a target transaction event, for example, an input address and an input amount, and may further include output data of the target transaction event, for example, an output address and an output amount.

In some examples, Table 3 shows a storage format of the transaction database.

**Table 3**

| Transaction hash: x | |
|---|---|
| Input 0: Input address 0, input amount 0, ...... | Output 0: Output address 0, output amount 0, ...... |
| Input 1: Input address 1, input amount 1, ...... | Output 1: Output address 1, output amount 1, ...... |
| Input 2: Input address 2, input amount 2, ...... | Output 2: Output address 2, output amount 2, ...... |

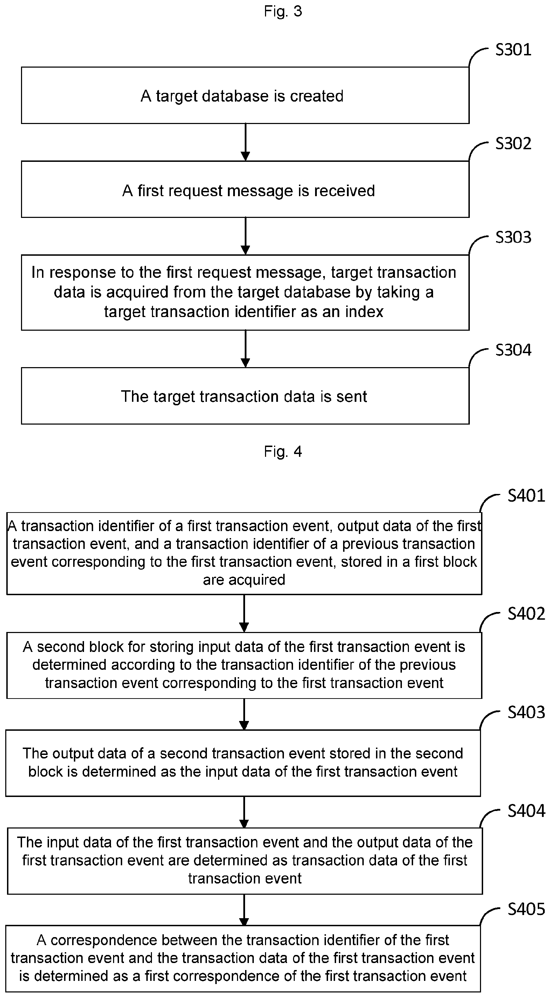

The data acquisition method provided in the embodiments of the present disclosure may be applied to the block chain node 121 in the application scenario shown in Fig. 1. As shown in Fig. 3, the data acquisition method may include: step 301 to step 304.

Step 301: the block chain node creates a target database.

The target database is used for storing transaction data corresponding to transaction identifiers of a plurality of transaction events in a block chain.

In some embodiments, the target database stores data in a target format.

In some embodiments, the target format may be a CSV format.

In some embodiments, the target database may include: a first correspondence for one-to-one correspondence between the transaction identifiers of the plurality of transaction events and the transaction data of the plurality of transaction events, and a second correspondence for one-to-one correspondence between block identifiers of a plurality of blocks and block data of the plurality of blocks. The block data of the plurality of blocks may include the transaction data of the plurality of transaction events.

In some embodiments, in combination with Fig. 2, the target database may include at least one of the block database 210 or the transaction database 220.

In some embodiments, the transaction data may include input data of a transaction event, for example, an input address and an input amount, and may further include output data of the transaction event, for example, an output address and an output amount.

In some embodiments, the transaction identifier may include a unique identifier of a transaction event, such as a transaction hash value (Tx hash) of the transaction event, a transaction number of the transaction event, and a transaction index value (Tx index) of the transaction event.

Step 302: the block chain node receives a first request message.

The first request message is used for requesting to acquire target transaction data of a target transaction event. The first request message includes a target transaction identifier of the target transaction event.

In one possible implementation, the method for the block chain node to receive the first request message may include: a client sends the first request message to the block chain node.

When a transaction event on the block chain is completed, a block for storing the transaction data of the current transaction event is generated on the block chain, at this time, the client may receive a receipt message sent by the block chain node, wherein the receipt message includes the transaction identifier of the current transaction event. Subsequently, when a user holding the client needs to query the target transaction data of the target transaction event in the block chain, data synchronization may be implemented based on the block chain, and the client may send the first request message to any block chain node.

Step 303: in response to the first request message, the block chain node acquires the target transaction data from the target database by taking the target transaction identifier as an index.

Since the transaction data corresponding to the transaction identifiers of the plurality of transaction events is stored in the target database, after receiving the request message, the block chain node acquires the target transaction data from the target database by taking the target transaction identifier as the index.

Step 304: the block chain node sends the target transaction data.

The technical solution provided in the above embodiment at least brings the following beneficial effects: it can be seen from step 301 to step 304 that, after receiving the first request message, in response to the first request message, the block chain node may acquire the target transaction data from the pre-created target database by taking the target transaction identifier as the index, and subsequently, the block chain node may send the target transaction data. In this way, since the transaction data stored in the database includes the input data and the output data, the block chain node merely needs to access the target database, so that the data acquisition efficiency can be improved.

In some embodiments, based on the method embodiment shown in Fig. 3, in combination with Fig. 3, as shown in Fig. 4, when the target database includes a first correspondence for one-to-one correspondence between the transaction identifiers of the plurality of transaction events and the transaction data of the plurality of transaction events, in order to determine the first correspondence, the data acquisition method further includes: step 401 to step 405.

Step 401: the block chain node acquires in a first block the transaction identifier of a first transaction event, the output data of the first transaction event, and the transaction identifier of a previous transaction event corresponding to the first transaction event.

The first transaction event is any one event among the plurality of transaction events, and the first block is a block for storing the output data of the first transaction event in the block chain.

In some embodiments, the first transaction event may also be the latest transaction event in the block chain.

In the UTXO mode, the input data of the current transaction event is the output data of the previous transaction event, therefore the transaction identifier of the current transaction event, the output data of the current transaction event and the transaction identifier of the previous transaction event may be stored in the block. At this time, the block chain node may traverse the data stored in the plurality of blocks on the block chain, so as to acquire the transaction identifier of the first transaction event, the output data of the first transaction event, and the transaction identifier of the previous transaction event corresponding to the first transaction event.

In some embodiments, the transaction identifier of the previous transaction event may include a spent hash value and a spent index.

Step 402: the block chain node determines a second block for storing the input data of the first transaction event according to the transaction identifier of the previous transaction event corresponding to the first transaction event.

After acquiring the transaction identifier of the previous transaction event corresponding to the first transaction event, the block chain node may traverse the data stored in the plurality of blocks, when the transaction identifier of the current transaction event stored in a block is the same as the transaction identifier of the previous transaction event corresponding to the first transaction event, it indicates that the current transaction event stored in the block is the previous transaction event corresponding to the first transaction event, and at this time, the block may be determined as the second block for storing the input data of the first transaction event.

Step 403: the block chain node determines the output data of a second transaction event stored in the second block as the input data of the first transaction event.

The second transaction event is the previous transaction event of the first transaction event.

In the UTXO mode, the input data of the current transaction event is the output data of the previous transaction event, therefore when the second transaction event is the previous transaction event of the first transaction event, the block chain node may determine the output data of the second transaction event stored in the second block as the input data of the first transaction event.

Step 404: the block chain node determines the input data of the first transaction event and the output data of the first transaction event as the transaction data of the first transaction event.

Step 405: the block chain node determines a correspondence between the transaction identifier of the first transaction event and the transaction data of the first transaction event as the first correspondence of the first transaction event.

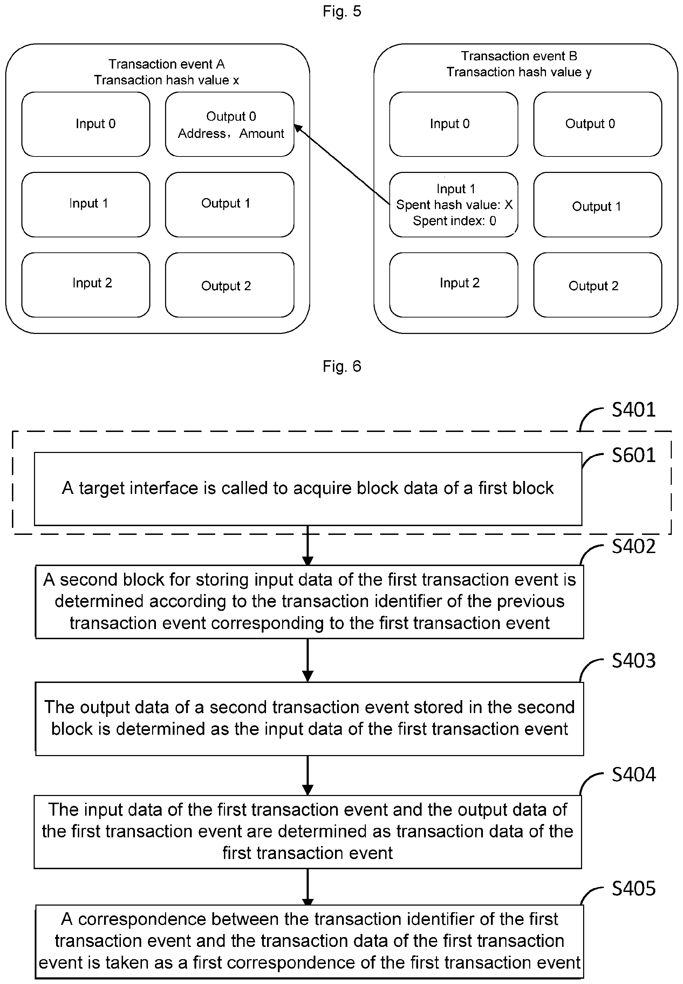

In some examples, as shown in Fig. 5, the block chain node may acquire from the data stored in the block that the transaction hash value of a transaction event B is "y", wherein the transaction event B includes an input of which the transaction sequence number is "0", an input of which the transaction sequence number is "1", an input of which the transaction sequence number is "2", an output of which the transaction sequence number is "0", an output of which the transaction sequence number is "1", and an output of which the transaction sequence number is "2". The input of which the transaction sequence number is "1" includes a transaction identifier of a previous transaction event A (of which the spent hash value is "x" and the spent index value is "0") corresponding to the transaction event B.

The block chain node traverses the data stored in the plurality of blocks to acquire that the transaction event A with the transaction hash value "x" includes: the input of which the transaction sequence number is "0", the input of which the transaction sequence number is "1", the input of which the transaction sequence number is "2", the output of which the transaction sequence number is "0", the output of which the transaction sequence number is "1", and the output of which the transaction sequence number is "2". The output data in the output corresponding to the transaction sequence number "0" that is the same as the spent index "0" includes: an address and an amount.

The block chain node may determine the address, the amount and the input data in the input of which the transaction sequence number is "1" in the transaction event B as the transaction data of the transaction event B, and store a correspondence between the transaction hash value "y" and the transaction data of the transaction event B.

The technical solution provided in the above embodiment at least brings the following beneficial effects: it can be seen from step 401 to step 405 that, the block chain node may determine the first correspondence between the transaction identifier and the transaction data of each transaction event according to the data of each transaction event stored in each block. Subsequently, when the client queries the transaction data stored in different blocks, the block chain node may directly read the first correspondence to acquire the transaction data without accessing the data stored in the plurality of blocks.

In some embodiments, with regard to the method for the block chain node to acquire the transaction identifier of the first transaction event, the output data of the first transaction event, and the transaction identifier of the previous transaction event corresponding to the first transaction event, stored in the first block, based on the method embodiment shown in Fig. 4, the present embodiment provides a possible implementation. In combination with Fig. 4, as shown in Fig. 6, in step 401, the method for the block chain node to acquire the transaction identifier of the first transaction event, the output data of the first transaction event, and the transaction identifier of the previous transaction event corresponding to the first transaction event, stored in the first block includes: step 601.

Step 601: the block chain node calls a target interface to acquire block data of the first block.

The block data (block info) of the first block includes the transaction identifier of the first transaction event, the output data of the first transaction event, and the transaction identifier of the previous transaction event corresponding to the first transaction event.

In some embodiments, the target interface may include a Remote Procedure Call (RPC) interface.

In some embodiments, the block data of the first block further includes a block identifier (block id) corresponding to the first block.

In some embodiments, the block data of the first block may include block header data and block body data; the block header data includes the block identifier; and the block body data includes the transaction identifier of the first transaction event, the output data of the first transaction event, and the transaction identifier of the previous transaction event corresponding to the first transaction event.

In a possible implementation, the method for the block chain node to call the target interface to acquire the block data of the first block may include: the block chain node calls the target interface to traverse the plurality of blocks in the block chain, so as to acquire the block data of each block among the plurality of blocks.

The technical solution provided in the above embodiment at least brings the following beneficial effects: it can be seen from step 601 that, the block chain node can call the target interface to acquire the block data of the first block, so that the transaction data and the transaction identifier of the first transaction event can be subsequently determined according to the block data of the first block.

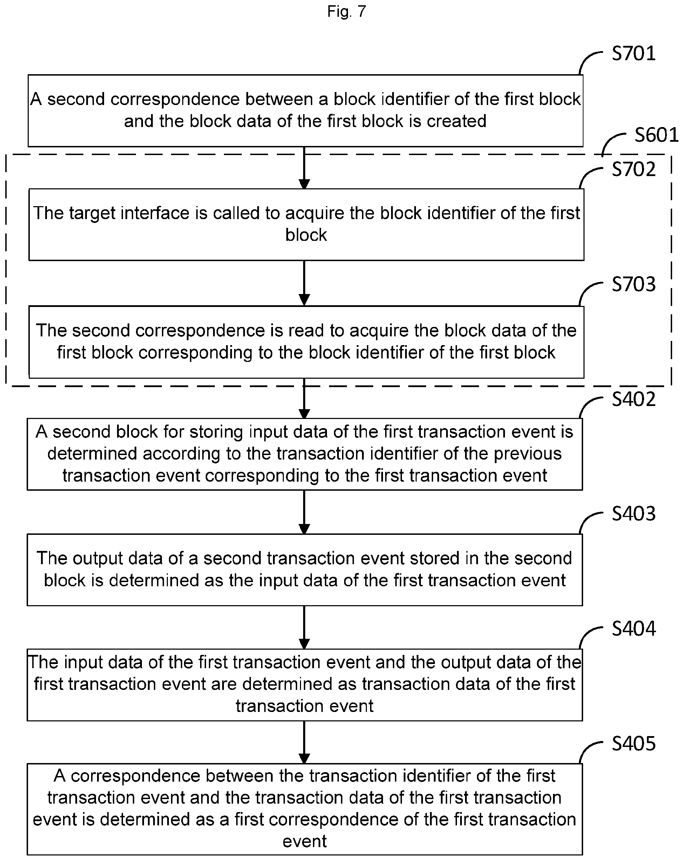

In some embodiments, based on the method embodiment shown in Fig. 6, the present embodiment provides a possible implementation. As shown in Fig. 7, the data acquisition method further includes: step 701.

Step 701: the block chain node creates a second correspondence between the block identifier of the first block and the block data of the first block.

The target database includes a second correspondence for one-to-one correspondence between transaction identifiers of a plurality of blocks and block data of the plurality of blocks, and the plurality of blocks include the first block.

In some embodiments, in combination with Fig. 2, the target database includes the block database 210, when the block database 210 is a KV database, the key is the block identifier of one block, and the value is the block data of the block.

In some embodiments, the block identifier may include a unique identifier of a block, such as a hash value of the block and a block number of the block.

The technical solution provided in the above embodiment at least brings the following beneficial effects: it can be seen from step 701 that, the block chain node may create the second correspondence between the block identifier of the first block and the block data of the first block. Subsequently, when needing to query the block data, the block chain node may directly read the target database to acquire the block data, and no interface is required to acquire the block data stored on the block.

As shown in Fig. 7, in step 601, the method for the block chain node to call the target interface to acquire the block data of the first block includes: step 702 to step 703.

Step 702: the block chain node calls the target interface to acquire the block identifier of the first block.

In a possible implementation, the method for the block chain node to call the target interface to acquire the block identifier of the first block may include: the block chain node calls the target interface to traverse the plurality of blocks in the block chain, so as to acquire the block identifier of each block among the plurality of blocks.

Step 703: the block chain node reads the second correspondence to acquire the block data of the first block corresponding to the block identifier of the first block.

In a possible implementation, in combination with Fig. 2, when the target database includes the block database 210, the block chain node may access the second correspondence from the block database 210.

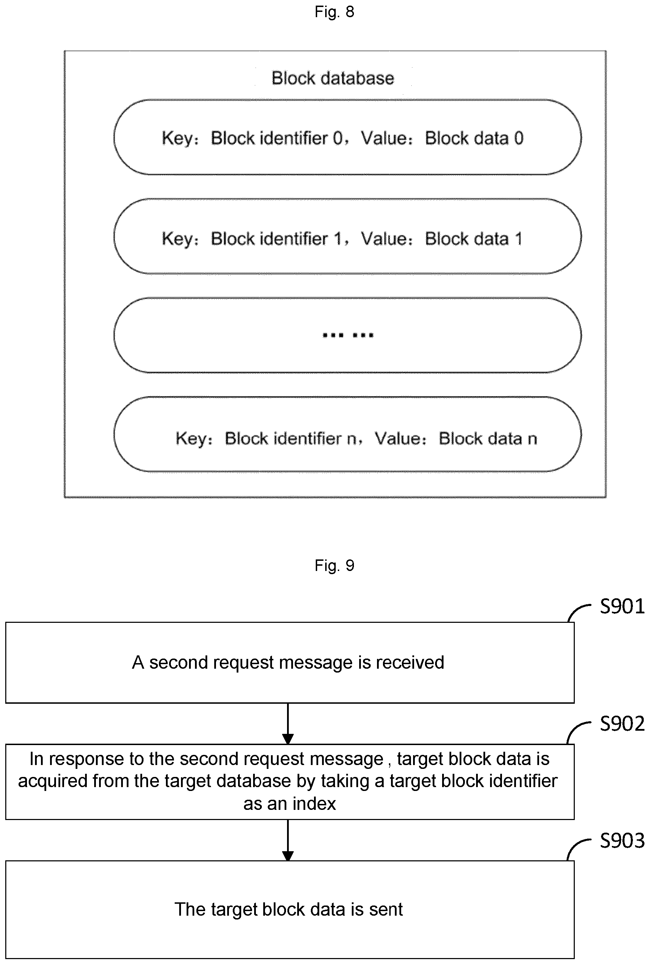

In some examples, as shown in Fig. 8, the second correspondence stored in the target database may include block data 0 stored in a block corresponding to a block identifier 0, block data 1 stored in a block corresponding to a block identifier 1, ...... and block data n stored in a block corresponding to a block identifier n.

The technical solution provided in the above embodiment at least brings the following beneficial effects: it can be seen from step 702 to step 703 that, the block chain node may call the target interface to acquire the block identifier of the first block, and then read the second correspondence to acquire the block data of the first block corresponding to the block identifier of the first block. In this way, the block chain node does not need to request the block data from the block, thereby reducing the amount of data acquired by calling the interface and effectively improving the data acquisition efficiency.

In some embodiments, as shown in Fig. 9, the data acquisition method further includes: step 901 to step 903.

Step 901: the block chain node receives a second request message.

The second request message is used for requesting to acquire target block data of a target block, and the second request message includes a target block identifier of the target block.

In one possible implementation, the method for the block chain node to receive the second request message may include: the client sends the second request message to the block chain node, or when any block chain node on the block chain needs to acquire the block data to perform a business service, the block chain node may generate the second request message.

Step 902: in response to the second request message, the block chain node acquire the target block data from the target database by taking the target block identifier as an index.

Since the block data corresponding to the block identifiers of the plurality of blocks is stored in the target database, after receiving the request message, the block chain node acquires the target block data from the target database by taking the target block identifier as the index.

Step 903: the block chain node sends the target block data.

The technical solution provided in the above embodiment at least brings the following beneficial effects: it can be seen from step 901 to step 903 that, after receiving the second request message, in response to the second request message, the block chain node may acquire the target block data from the pre-created target database by taking the target block identifier as the index, and the block chain node may send the target block data subsequently. In this way, the block chain node merely needs to access the target database to acquire the block data, so that the data acquisition efficiency can be improved.

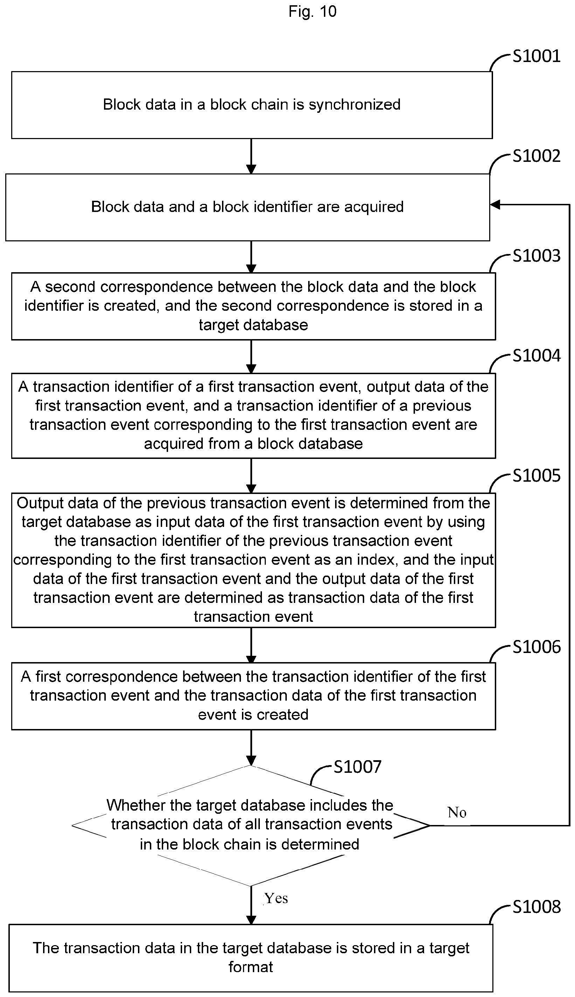

The embodiments of the present disclosure are described below in combination with Fig. 10. The data acquisition method includes step 1001 to step 1008.

Step 1001: a block chain node synchronizes block data in a block chain.

In some embodiments, after the initialization of a block chain system is completed, the block chain node on the block chain may synchronize the block data after running.

Step 1002: the block chain node acquires block data and a block identifier.

Step 1003: the block chain node creates a second correspondence between the block data and the block identifier, and stores the second correspondence in a target database.

Step 1004: the block chain node acquires, from a block database, a transaction identifier of a first transaction event, output data of the first transaction event, and a transaction identifier of a previous transaction event corresponding to the first transaction event.

Step 1005: the block chain node determines output data of the previous transaction event from the target database as input data of the first transaction event by using the transaction identifier of the previous transaction event corresponding to the first transaction event as an index, and determines the input data of the first transaction event and the output data of the first transaction event as transaction data of the first transaction event.

Step 1006: the block chain node creates a first correspondence between the transaction identifier of the first transaction event and the transaction data of the first transaction event.

Step 1007: the block chain node determines whether the target database includes the transaction data of all transaction events in the block chain.

When the target database does not include the transaction data of all transaction events in the block chain, step 1002 to step 1007 are repeatedly executed.

When the target database includes the transaction data of all transaction events in the block chain, step 1008 is executed.

Step 1008: the block chain node stores the transaction data in the target database in a target format.

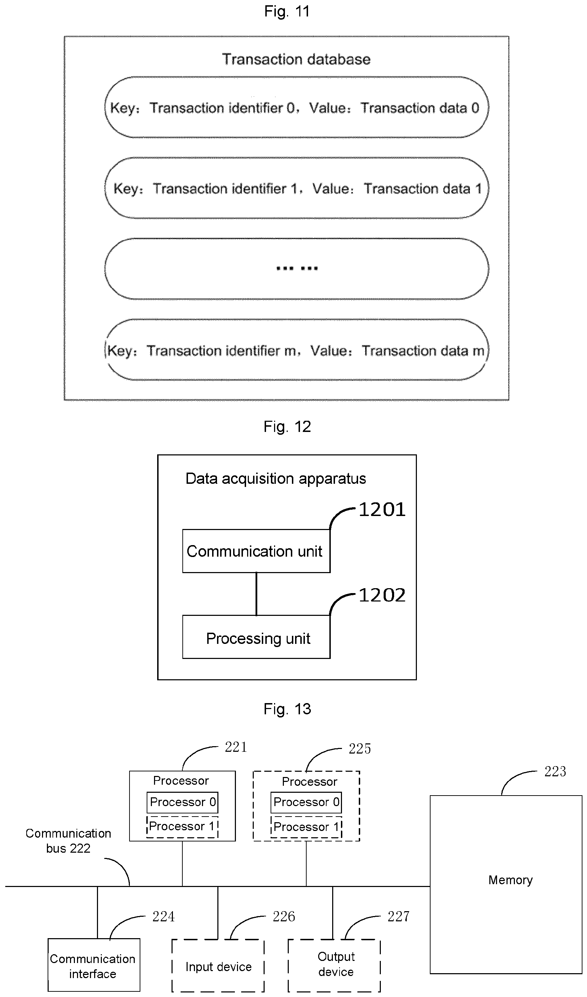

As shown in Fig. 11, the target database created by the block chain node further includes: transaction data 0 of a transaction event corresponding to a transaction identifier 0, transaction data 1 of a transaction event corresponding to a transaction identifier 1, ...... and transaction data m of a transaction event corresponding to a transaction identifier m.

It can be understood that, during actual implementation, the data acquisition apparatus according to the embodiments of the present disclosure may include one or more hardware structures and/or software modules for implementing the foregoing corresponding data acquisition method, and these execution hardware structures and/or software modules may constitute an electronic device. Those skilled in the art should be easily aware that, in combination with the algorithm steps of various examples described in the embodiments disclosed in the present specification, the embodiments of the present disclosure may be implemented based on hardware or a combination manner of hardware and computer software. Whether a certain function is executed by hardware or computer software driving hardware depends on particular applications and design constraint conditions of the technical solutions. Those skilled in the art may use different methods to implement the described functions for each particular application, but it should not be considered that this implementation goes beyond the scope of the embodiments of the present disclosure.

Based on this understanding, an embodiment of the present disclosure further correspondingly provides a data acquisition apparatus. Fig. 12 is a structural diagram of a data acquisition apparatus according to one or more embodiments. As shown in Fig. 12, the data acquisition apparatus includes a communication unit 1201 and a processing unit 1202, wherein the communication unit 1202 is configured to receive a first request message; the processing unit 1202 is configured to, in response to the request message, acquire target transaction data from a target database by taking a target transaction identifier as an index; and the communication unit 1201 is further configured to send the target transaction data.

In some embodiments, the processing unit 1202 is further configured to acquire the transaction identifier of a first transaction event stored in a first block, the output data of the first transaction event, and the transaction identifier of a previous transaction event corresponding to the first transaction event; determine a second block for storing input data of the first transaction event according to the transaction identifier of the previous transaction event corresponding to the first transaction event; determine output data of a second transaction event stored in the second block as the input data of the first transaction event; and determine the input data of the first transaction event and the output data of the first transaction event as the transaction data of the first transaction event; and determine a correspondence between the transaction identifier of the first transaction event and the transaction data of the first transaction event as a first correspondence of the first transaction event.

In some embodiments, the processing unit 1202 is configured to call a target interface to acquire block data of the first block.

In some embodiments, the processing unit 1202 is further configured to create a second correspondence between a block identifier of the first block and the block data of the first block.

In some embodiments, the processing unit 1202 is configured to call the target interface to acquire the block identifier of the first block, and read the second correspondence to acquire the block data of the first block corresponding to the block identifier of the first block.

In some embodiments, the processing unit 1202 is configured to call the target interface to traverse a plurality of blocks in the block chain, so as to acquire the block identifier of each block among the plurality of blocks.

In some embodiments, the communication unit 1201 is further configured to receive a second request message, in response to the second request message, acquire target block data from the target database by taking a target block identifier as an index, and send the target block data.

As described above, the embodiments of the present disclosure may divide the functional modules of the block chain node according to the above method examples. The integrated module may be implemented in the form of hardware and may also be implemented in the form of a software functional module. In addition, it should also be noted that the division of the modules in the embodiments of the present disclosure is schematic and is merely a logical function division, and there may be other division manners during actual implementation. For example, the functional modules may be divided corresponding to the functions, or two or more functions may be also integrated into one processing module.

With regard to the data acquisition apparatus in the above embodiment, the manner in which each module executes an operation and the beneficial effects of the data acquisition apparatus have been described in detail in the foregoing method embodiments, and thus details are not described herein again.

An embodiment of the present disclosure further provides a data acquisition apparatus. Fig. 13 is a structural diagram of another data acquisition apparatus according to one or more embodiments. The data acquisition apparatus may include at least one processor 221, a communication bus 222, a memory 223, and at least one communication interface 224.

The processor 221 may be a central processing unit (CPU), a micro processing unit, an ASIC, or one or more integrated circuits for controlling the program execution of the solutions in the present disclosure. In combination with Fig. 13, the processor 221 is configured to execute operations executed by the processing unit 1202.

The communication bus 222 may include a path for transmitting information between the above components.

The communications interface 224, an apparatus using a transceiver of any type, is configured to communicate with another device or communications network, such as an electronic device, an Ethernet, a radio access network (RAN), and a wireless local area network, etc. In combination with Fig. 13, the communications interface 224 is configured to operations executed by the communications unit 1201.

The memory 223 may be a read-only memory (ROM) or other types of static storage devices capable of storing static information and instructions, a random access memory (RAM) or other types of dynamic storage devices capable of storing information and instructions, an electrically erasable programmable read-only memory (EEPROM), a compact disc read-only memory (CD-ROM) or other compact disc storages, optical disc storages (including compressed optical disks, laser disks, optical disks, digital versatile disks, Blu-ray disks, etc.), a magnetic disk storage medium or other magnetic storage devices, or any other media that may be used for carrying or storing desired program codes in the form of instructions or data structures and may be accessed by a computer, but is not limited thereto. The memory may be present independently and is connected with the processing unit via a bus, and the memory may also be integrated with the processing unit.

The memory 223 is configured to store application program codes for executing the solutions of the present disclosure, and the processor 221 controls the execution. The processor 221 is configured to execute the application program codes stored in the memory 223, so as to implement functions in the method of the present disclosure.

In some embodiments, the processor 221 may include one or more CPUs, for example, a processor 0 and a processor 1 in Fig. 13.

In some embodiments, the data acquisition apparatus may include a plurality of processors, for example, a processor 221 and a processor 225 in Fig. 13. Each of these processors may be a single-CPU processor and may also be a multi-CPU processor. The processor herein may refer to one or more devices, circuits, and/or processing cores for processing data (e.g., computer program instructions).

In some embodiments, the data acquisition apparatus may further include an input device 226 and an output device 227, wherein the input device 226 communicates with the output device 227, and may accept the input of the user in a plurality of manners, for example, the input device 226 may be a mouse, a keyboard, a touch screen device, a sensing device, or the like; and the output device 227 communicates with the processor 221, and may display information in a variety of manners, for example, the output device 227 may be a liquid crystal display (LCD), a light emitting diode (LED) display device, etc.

Those skilled in the art may understand that the structure shown in Fig. 13 does not constitute a limitation on the data acquisition apparatus, and the data acquisition apparatus may include more or fewer components than those illustrated, or combine some components or use different component arrangements.

An embodiment of the present disclosure further provides a computer-readable storage medium including an instruction, wherein the instruction is stored on the computer-readable storage medium, and when the instruction in the computer-readable storage medium is executed by a processor of a data acquisition apparatus, the data acquisition apparatus may execute the data acquisition method provided in the above embodiments. For example, the computer-readable storage medium may be the memory 223 including an instruction, and the instruction may be executed by the processor 221 of the data acquisition apparatus to complete the above method.

In some embodiments, the computer-readable storage medium may be a non-transitory computer-readable storage medium, for example, without limitation, the non-transitory computer-readable storage medium may include a hard disk drive (HDD), a floppy disk drive, a flash memory, an optical disk, a magneto-optical disk, a magnetic tape or a universal serial bus (USB) drive, or combinations of two or more of the above. In some examples, the computer-readable storage medium may include a removable or non-removable (or fixed) medium, or the computer-readable storage medium is a non-volatile solid-state memory. The computer-readable storage medium may be inside or outside the data acquisition apparatus.

Those skilled in the art may easily think of other implementation solutions of the present disclosure after considering the specification and practicing the invention disclosed herein. The present disclosure is intended to cover any variations, uses or adaptive changes of the present disclosure, and these variations, uses or adaptive changes follow the general principles of the present disclosure and include common general knowledge or customary technical means in the art that are not disclosed in the present disclosure. The specification and embodiments are merely considered as being exemplary, and the true scope and spirit of the present disclosure are indicated by the following claims.

It should be understood that the present disclosure is not limited to the precise structures that have been described above and shown in the drawings, and various modifications and changes may be made without departing from the scope thereof. The scope of the present disclosure is only limited by the appended claims.

## Claims

1. A data acquisition method, comprising:
creating a target database, wherein the target database is a database for storing transaction data corresponding to transaction identifiers of a plurality of transaction events in a block chain, and the transaction data comprises input data and output data;
receiving a first request message, wherein the first request message is configured to request to acquire target transaction data of a target transaction event, and the first request message comprises a target transaction identifier of the target transaction event;
in response to the first request message, acquiring the target transaction data from the target database by taking the target transaction identifier as an index; and
sending the target transaction data.

2. The data acquisition method as claimed in claim 1, wherein the target database comprises a first correspondence for one-to-one correspondence between the transaction identifiers of the plurality of transaction events and the transaction data of the plurality of transaction events; and the data acquisition method further comprises:
acquiring in a first block a transaction identifier of a first transaction event, output data of the first transaction event, and a transaction identifier of a previous transaction event corresponding to the first transaction event, wherein the first transaction event is any one event among the plurality of transaction events, and the first block is a block for storing the output data of the first transaction event in the block chain;
determining a second block for storing input data of the first transaction event according to the transaction identifier of the previous transaction event corresponding to the first transaction event;
determining output data of a second transaction event stored in the second block as the input data of the first transaction event, wherein the second transaction event is the previous transaction event of the first transaction event;
determining the input data of the first transaction event and the output data of the first transaction event as the transaction data of the first transaction event; and
determining a correspondence between the transaction identifier of the first transaction event and the transaction data of the first transaction event as a first correspondence of the first transaction event.

3. The data acquisition method as claimed in claim 2, wherein acquiring in the first block the transaction identifier of the first transaction event, the output data of the first transaction event, and the transaction identifier of the previous transaction event corresponding to the first transaction event comprises:
calling a target interface to acquire block data of the first block, wherein the block data of the first block comprises the transaction identifier of the first transaction event, the output data of the first transaction event, and the transaction identifier of the previous transaction event corresponding to the first transaction event, and the target interface comprises a Remote Procedure Call (RPC) interface.

4. The data acquisition method as claimed in claim 3, wherein the target database further comprises a second correspondence for one-to-one correspondence between block identifiers of a plurality of blocks and block data of the plurality of blocks, the plurality of blocks comprise the first block, and the block data of the first block further comprises a block identifier of the first block; and the data acquisition method further comprises:
creating a second correspondence between the block identifier of the first block and the block data of the first block.

5. The data acquisition method as claimed in claim 4, wherein calling the target interface to acquire the block data of the first block comprises:
calling the target interface to acquire the block identifier of the first block; and
reading the second correspondence to acquire the block data of the first block corresponding to the block identifier of the first block.

6. The data acquisition method as claimed in claim 5, wherein calling the target interface to acquire the block identifier of the first block comprises:
calling the target interface to traverse the plurality of blocks in the block chain, so as to acquire a block identifier of each block among the plurality of blocks.

7. The data acquisition method as claimed in any of claims 4-6, further comprising:
receiving a second request message, wherein the second request message is configured to request to acquire target block data of a target block, and the second request message comprises a target block identifier of the target block;
in response to the second request message, acquiring the target block data from the target database by taking the target block identifier as an index; and
sending the target block data.

8. The data acquisition method as claimed in any of claims 4-7, wherein the target database comprises a transaction database and a block database, the transaction database is configured to store the first correspondence, and the block database is configured to store the second correspondence.

9. The data acquisition method as claimed in claim 8, wherein the transaction database and the block database are key-value databases.

10. The data acquisition method as claimed in any of claims 1-9, wherein the target database stores correspondences in a target format, and the target format comprises a Common Separated Values (CSV) format.

11. The data acquisition method as claimed in any of claims 1-10, wherein the transaction identifier comprises at least one of: a transaction hash value, a transaction number, and a transaction index value.

12. The data acquisition method as claimed in any of claims 1-11, wherein a transaction mode in the block chain is an Unspent Transaction Output (UTXO) mode.

13. A data acquisition apparatus, comprising a communication unit and a processing unit, wherein
the processing unit is configured to create a target database, wherein the target database is a database for storing transaction data corresponding to transaction identifiers of a plurality of transaction events in a block chain, and the transaction data comprises input data and output data;
the communication unit is configured to receive a first request message, wherein the first request message is configured to request to acquire target transaction data of a target transaction event, and the first request message comprises a target transaction identifier of the target transaction event;
the processing unit is further configured to, in response to the first request message, acquire the target transaction data from the target database by taking the target transaction identifier as an index; and
the communication unit is further configured to send the target transaction data.

14. An electronic device, comprising a memory, a processor, and a computer program stored on the memory and executable on the processor, wherein the computer program, when executed by the processor, implements the data acquisition method as claimed in any of claims 1-12.

15. A computer-readable storage medium, wherein a computer program is stored on the computer-readable storage medium, and the computer program, when executed by a processor, implements the data acquisition method as claimed in any of claims 1-12.
